# FASCICULE DE BREVET EUROPEEN

(11) **EP 0 902 353 B1**
(45) Date de publication et mention de la délivrance du brevet: **11.06.2003**
(21) Numéro de dépôt: 97115907.4
(22) Date de dépôt: 12.09.1997
(51) Int. Cl.: G06F 1/32

(54) **Moyens pour réveiller un système fonctionnant en mode "sleep"**
Mittel zum Aufwecken eines Systems, das in Schlafmodus arbeitet
Device for waking up a system working in sleep mode

(43) Date de publication de la demande: 17.03.1999
(73) Titulaire: EM Microelectronic-Marin SA, 2074 Marin (CH)
(72) Inventeur: Divoux, Jean-Noel, 2300 La Chaux-de-Fonds (CH)
(74) Mandataire: Ravenel, Thierry Gérard Louis

(56) Documents cités:
- EP-A- 0 474 963
- US-A- 4 698 748

## Description

La présente invention concerne le domaine des circuits électroniques et, plus particulièrement, des moyens pour réveiller un système fonctionnant en mode "sleep".

Dans la présente description, on entend par circuit électronique un système comprenant une unité de traitement centrale à laquelle peut être connecté au moins un périphérique, une horloge de système pour fournir un signal d'horloge à tous les moyens logiques du système, notamment à l'unité de traitement centrale. Tous les composants du système sont alimentés par une source d'alimentation électrique.

De façon générale, un tel système peut fonctionner dans l'un des trois modes suivants : un mode "run" ou "active", un mode "stand-by" ou "halt", et un mode "sleep".

Quand le système est en mode "run", tous ses composants fonctionnent. Quand il est en mode "stand-by", seuls les périphériques fonctionnent, et typiquement l'unité de traitement centrale et la mémoire ROM sont arrêtées, c'est-à-dire ne sont plus activées par le signal d'horloge. Et quand le système est en mode "sleep", tous les composants sont arrêtés, y compris l'horloge de système, et seule la source d'alimentation maintient le système alimenté. Ainsi, la plupart du temps, un tel système fonctionne en mode "sleep", ce qui permet de réaliser une diminution notable de sa consommation de puissance électrique.

Un problème que rencontrent alors les concepteurs d'un système tel que décrit ci-dessus, réside dans la réalisation de son "réveil", c'est-à-dire de son passage du mode "sleep" au mode "run" ou au mode "stand-by".

Une solution classique à un tel problème consiste à fournir, par l'intermédiaire de moyens externes au système, un signal de remise à zéro de l'ensemble du système. Par exemple, de tels moyens externes peuvent être formés par une clé pourvue de moyens pour fournir au système le signal de remise à zéro, quand celle-ci est approchée du système, et activée sous l'action d'un utilisateur.

Un inconvénient d'une telle solution réside dans le fait qu'il est nécessaire d'utiliser des moyens supplémentaires pour remettre à zéro le système, ce qui va à l'encontre de préoccupations habituelles en industrie de coût et d'encombrement.

Un autre inconvénient de cette solution réside dans le fait qu'il est nécessaire d'utiliser des moyens externes au système pour le remettre à zéro, de sorte qu'il ne peut se réveiller de façon autonome.

Une autre solution classique au problème susmentionné consiste à créer une base de temps différente de celle fournie par l'horloge de système, cette dernière étant désactivée en mode "sleep". Ladite base de temps doit pouvoir mesurer une durée dès que le système passe en mode "sleep".

A titre d'exemple, le document EP 0 586 256 décrit, dans le domaine des téléphones mobiles, un système comprenant une première horloge ou horloge de système fonctionnant à une fréquence élevée, et une seconde horloge fonctionnant à une fréquence plus basse. L'horloge de système peut rentrer en mode "sleep", c'est-à-dire être désactivée pendant des durées prédéterminées. La durée de sommeil peut être mesurée en comptant le nombre d'impulsions basse-fréquence fournis par la seconde horloge.

Un inconvénient d'une telle solution réside dans le fait qu'il est nécessaire de calibrer l'horloge basse-fréquence par rapport à l'horloge de système.

Le document US-A-4,698,748 décrit encore un exemple d'un système comprenant une horloge additionnelle et un timer pour remplir la fonction de surveillance et de réactivation du système.

La demanderesse de la présente invention a observé que les solutions classiques telles que décrites ci-dessus nécessitent des moyens dédiés au fonctionnement du système en mode "sleep", et que ces moyens occasionnent une consommation notable de puissance électrique, typiquement de l'ordre de quelques centaines de nano-ampères (1 nA = 10⁻⁹ A) à quelques micro-ampères (1 µA = 10⁻⁶ A).

Un objet de la présente invention est de prévoir un système comprenant des moyens de réveil, quand le système est en mode "sleep", ce système palliant les inconvénients susmentionnés.

Un autre objet de la présence invention est de prévoir un tel système occasionnant une faible consommation de puissance électrique, lors de son fonctionnement en mode "sleep".

Un autre objet de la présente invention est de prévoir un tel système répondant aux critères traditionnels en industrie de coût et de complexité.

Ces objets, ainsi que d'autres, sont atteints par le système selon la revendication 1.

Un avantage des moyens de réveil du système selon la présente invention réside dans le fait qu'ils sont agencés de manière à réaliser, dès que le système passe en mode "sleep", une base de temps autonome et un réveil de ce système au terme d'une durée prédéterminée et, quand le système n'est pas en mode "sleep", une fonction différente de celles de base de temps et de réveil. Un tel agencement permet ainsi au système de se réveiller de façon autcnome, sans avoir recours à des moyens dédiés uniquement au fonctionnement du système en mode "sleep", ce qui rationalise son encombrement et son coût.

Un autre avantage des moyens de réveil du système selon la présente invention réside dans le fait qu'ils sont internes au système, permettant ainsi au système de se réveiller sans avoir recours à des moyens externes, ce qui rationalise la complexité du système.

Un autre avantage des moyens de réveil du système selon la présente invention réside dans le fait que les moyens de détection d'oscillation sont utilisés en mode "sleep" pour réaliser la base de temps autonome, uniquement à partir de l'injection du courant fourni par la source d'alimentation électrique, ce qui n'occasionne qu'une faible consommation de puissance électrique, lors de son fonctionnement en mode "sleep".

Un avantage des moyens de mémorisation du système selon la présente invention réside dans le fait qu'ils sont agencés de manière à stocker une pluralité de nombres d'impulsions prédéterminés, et à fournir l'un de ces nombres représentant la durée prédéterminée de la base de temps autonome, ce qui permet de faire varier la durée du fonctionnement du système en mode "sleep".

Ces objets, caractéristiques et avantages, ainsi que d'autres, de la présente invention apparaîtront plus clairement à la lecture de la description détaillée d'un mode de réalisation préféré de l'invention, donné à titre d'exemple uniquement, en relation avec les figures jointes, parmi lesquelles :
- la figure 1 représente un système selon la présente invention;
- la figure 2 représente un schéma électrique simplifié des moyens de détection d'oscillation de la figure 1;
- la figure 3 représente trois chronogrammes illustrant les formes d'onde de trois signaux relatifs aux moyens de détection d'oscillation de la figure 2, quand le système de la figure 1 est en mode "run" ou "stand-by";
- la figure 4 représente trois chronogrammes illustrant les formes d'onde de trois signaux relatifs aux moyens de détection d'oscillation de la figure 2, quand le système de la figure 1 est en mode "sleep"; et
- la figure 5 représente trois chronogrammes illustrant respectivement les formes d'ondes de trois signaux présents dans le système de la figure 1, quand celui-ci fonctionne en mode "run", "stand-by" ou "sleep".

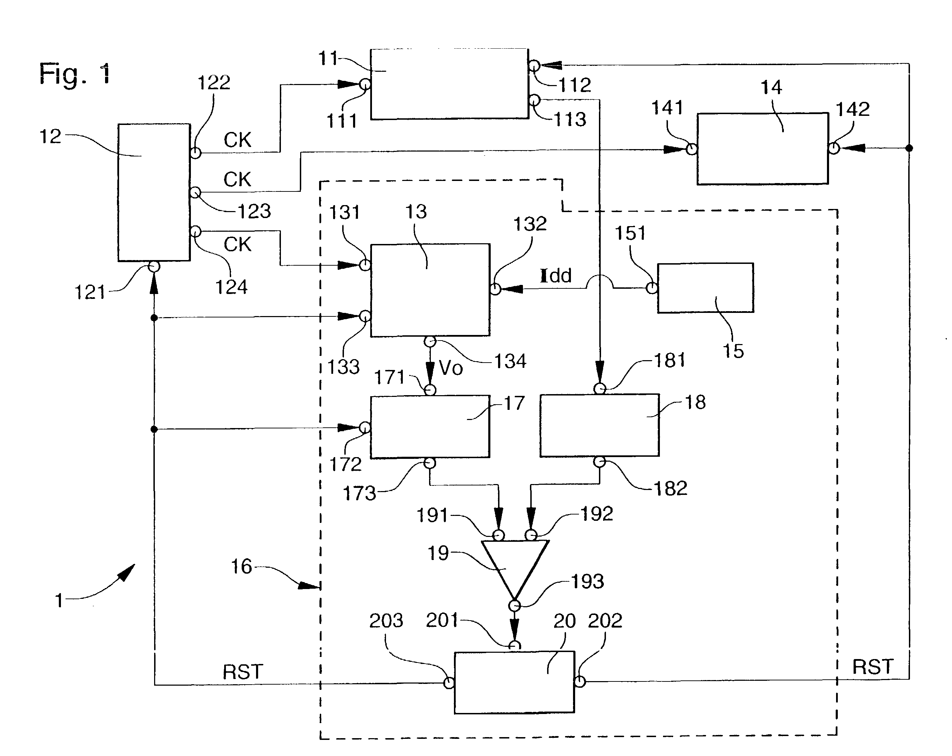

La figure 1 représente un système 1 selon la présente invention.

Le système 1 comprend une unité de traitement centrale 11, une horloge de système 12 et des moyens de détection d'oscillation 13. Le système 1 peut également comprendre au moins un périphérique 14.

Il va de soi que le système 1 comprend en outre une source d'alimentation électrique (non représentée) agencée de manière à fournir une tension d'alimentation Vdd référencée par rapport à une tension de masse Vss. Chaque composant du système 1 comprend une borne d'alimentation (non représentée) destinée à recevoir la tension d'alimentation Vdd, et une borne de masse (non représentée) destinée à recevoir la tension de masse Vss. Ainsi, les différentes tensions présentes dans le système 1 sont comprises entre la tension d'alimentation Vdd et la tension de masse Vss.

Le système 1 peut en outre fonctionner dans l'un des trois modes "run, "stand-by" et "sleep" tels que décrits ci-dessus.

L'unité de traitement centrale 11 comprend des première et seconde bornes d'entrée désignées respectivement 111 et 112, et une borne de sortie 113.

Le périphérique 14 comprend des première et seconde bornes d'entrée désignées 141 et 142. Il va de soi que ce périphérique peut comprendre en outre au moins une borne de sortie (non représentée).

L'horloge de système 12 comprend une borne d'entrée 121 et des première, deuxième et troisième bornes de sortie désignées respectivement 122 à 124. L'horloge de système 12 est agencée de manière à pouvoir fournir un signal d'horloge CK, par les bornes 122 à 124. A cet effet, la borne 122 est connectée à la borne 111, de sorte que l'unité de traitement centrale 11 peut recevoir le signal d'horloge CK, par la borne 111. Et la borne 123 est connectée à la borne 141, de sorte que le périphérique 14 peut recevoir le signal d'horloge CK, par la borne 141. A titre d'exemple uniquement, la fréquence du signal d'horloge CK fourni par les bornes 122 et 123, est typiquement de l'ordre de 600 kHz.

Les moyens de détection d'oscillation 13 comprennent des première, deuxième et troisième bornes d'entrée désignées respectivement 131 à 133, une borne de sortie 134, et une borne de masse (non représentée) destinée à recevoir la tension Vss. Les moyens de détection d'oscillation 13 sont agencés pour contrôler l'activité de l'horloge de système 12. A cet effet, la borne 131 est connectée à la borne 124, de sorte que les moyens de détection d'oscillation 13 peuvent recevoir le signal d'horloge CK à une première fréquence. Et, à ce titre, les moyens de détection d'oscillation 13 sont aussi communément appelés oscillateur "watch-dog" ou oscillateur "analog watch-dog".

On note que la première fréquence peut être inférieure à la fréquence du signal d'horloge CK fourni à l'unité de traitement centrale 11 et au périphérique 14. A titre d'exemple, la première fréquence est typiquement de l'ordre de 500 Hz.

A cet effet, l'horloge de système 12 comprend également une chaîne de division de fréquence (non représentée) agencée de manière à recevoir un signal d'entrée ayant une fréquence égale à 600 kHz, et fournir un signal de sortie ayant une fréquence comprise entre 600 kHz et quelques Hz. Il va de soi que les différentes valeurs de fréquence ne sont données qu'à titre illustratif uniquement.

Le système 1 comprend en outre des moyens de conversion de tension 15 qui comprennent une borne de sortie 151. Les moyens de conversion de tension 15 sont agencés pour recevoir la tension d'alimentation Vdd, comme cela a déjà été mentionné ci-dessus, et pour fournir en réponse un courant Idd, par la borne 151. De préférence, les moyens de conversion de tension 15 sont constitués de miroir de courant agencés pour fournir le courant Idd, de sorte que ce courant a une valeur prédéterminée. A titre illustratif uniquement, le courant Idd est sensiblement égal à 1 nA. Ainsi, la borne 151 est connectée à la borne 132, de sorte que les moyens de détection d'oscillation 13 peuvent recevoir le courant Idd qui est typiquement égal à 1 nA, par exemple.

On va brièvement rappeler la structure des moyens de détection d'oscillation 13 du système de la figure 1.

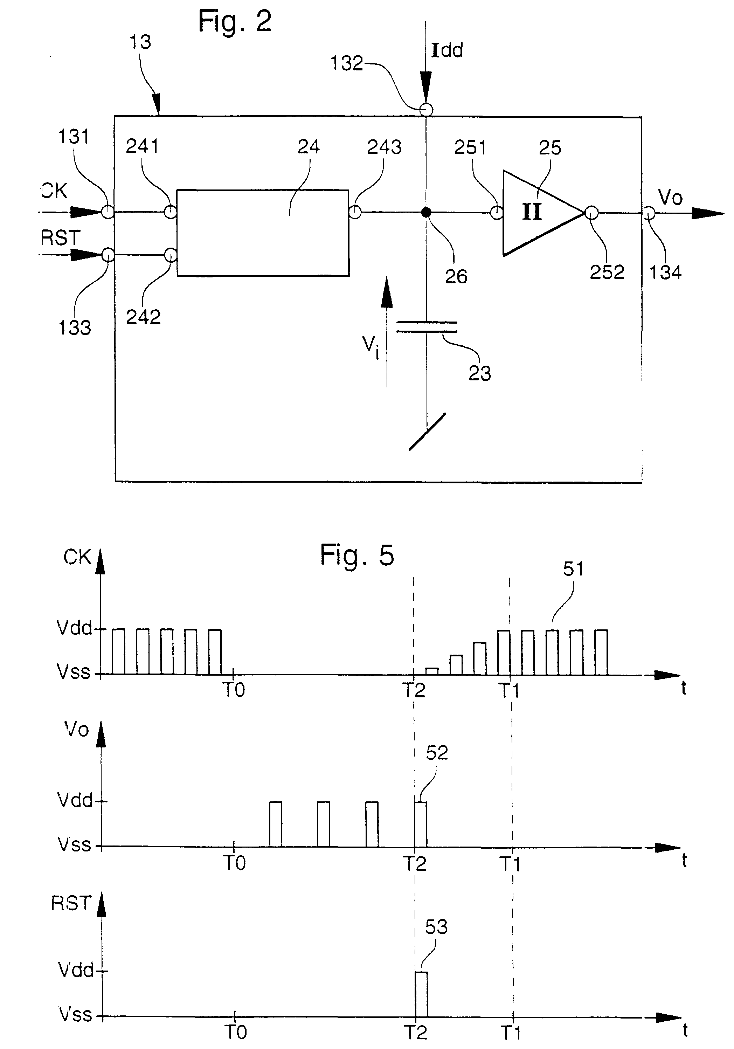

La figure 2 représente un schéma électrique simplifié de ces moyens.

Comme cela a déjà été décrit en relation avec la figure 1, les moyens de détection d'oscillation 13 comprennent les bornes 131 à 134.

Comme le représente la figure 2, les moyens de détection d'oscillation 13 comprennent en outre des moyens de stockage 23, des moyens de remise à zéro 24, et des moyens de détection de seuil 25. De préférence, on utilise un condensateur en tant que moyens de stockage 23, et un circuit dit "Trigger de Schmidt" en tant que moyens de détection de seuil 25.

Un noeud 26 est connecté à la borne 132 et à l'une des deux armatures du condensateur 23, de sorte que ce condensateur est chargé par le courant Idd fourni par la borne 132. L'autre armature du condensateur 23 est connectée à la masse.

Les moyens de remise à zéro 24 comprennent des première et seconde bornes d'entrée désignées respectivement 241 et 242, et une borne de sortie 243. Les moyens de remise à zéro 24 sont agencés de manière à pouvoir recevoir un signal de commande de remise à zéro, et remettre à zéro la tension aux bornes du condensateur 23, cette tension étant désignée Vi. Typiquement, un tel signal de commande peut correspondre à un front montant du signal d'horloge CK. A cet effet, la borne 243 est connectée à la borne 131, de sorte que les moyens de remise à zéro 24 reçoivent le signal d'horloge CK, et la borne 243 est connectée au noeud 26, de manière à pouvoir remettre à zéro la tension Vi.

Le circuit "Trigger de Schmidt" 25 comprend une borne d'entrée 251 et une borne de sortie 252. Le circuit "Trigger de Schmidt" 25 est agencé de manière à pouvoir recevoir la tension Vi, détecter si cette tension est supérieure à un seuil de tension Vth, et fournir une tension Vo qui correspond à une impulsion, quand la tension Vi est supérieure au seuil de tension Vth. A cet effet, la borne 251 est connectée au noeud 26, de sorte que le circuit "Trigger de Schmidt" 25 peut recevoir la tension Vi, et la borne 252 est connectée à la borne 134, de sorte que la tension Vo est fournie en tant que tension de sortie des moyens de détection d'oscillation 13.

On note, dans le cas préféré où les moyens de détection de seuil 25 sont constitués d'un circuit "Trigger de Schmidt", que le seuil de tension Vth correspond au point de commutation de ce circuit.

On va brièvement rappeler le fonctionnement de moyens de détection d'oscillation 13 de la figure 2, dans le cas où le système 1 est en mode "run" ou "stand-by".

On rappelle, indépendamment du mode de fonctionnement du système 1, que tous les composants de ce système sont maintenus sous la tension Vdd. Il en résulte une injection continue du courant Idd, par la borne 132, ce qui a pour effet de charger le condensateur 23, de sorte que la tension Vi est une fonction linéaire avec le temps désigné t.

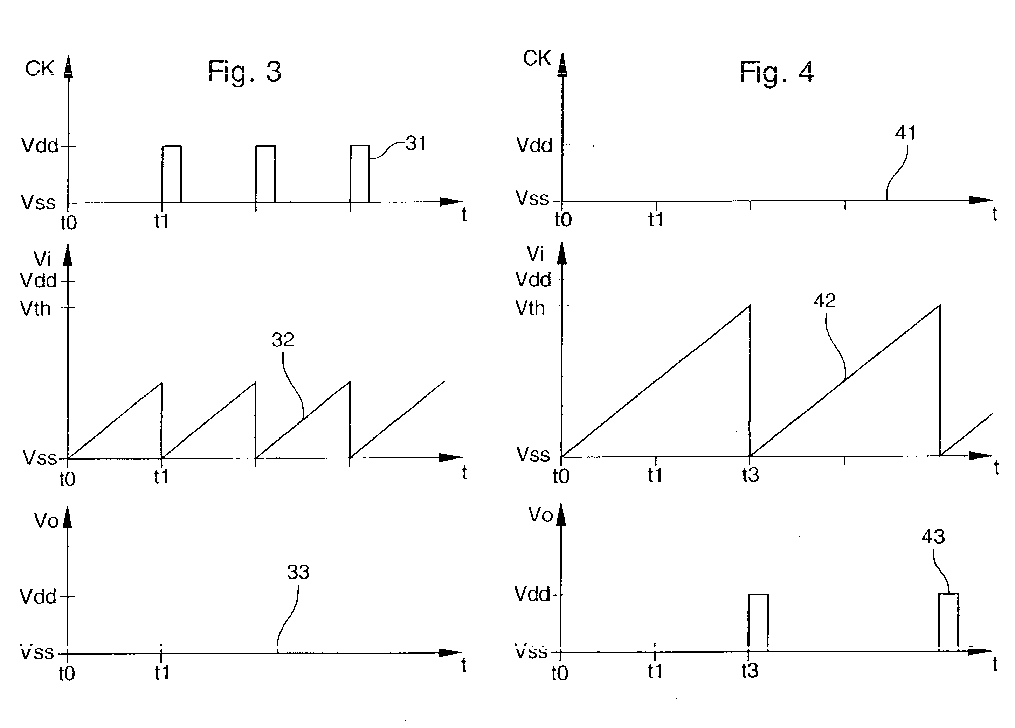

La figure 3 représente trois chronogrammes 31 à 33 illustrant respectivement les formes d'onde du signal d'horloge CK, de la tension Vi et de la tension Vo.

A un instant initial t0, la tension Vi est nulle, puis croît linéairement avec le temps t, comme le représente le chronogramme 32. En outre, quand le système 1 est en mode "run" ou "stand-by", le signal d'horloge CK change d'état périodiquement, comme le représente le chronogramme 31. On rappelle que la fréquence du signal d'horloge CK est typiquement égale à 500 Hz. Ainsi, à l'instant t0, le signal d'horloge CK est égal à un état bas, par exemple Vss, et à un instant t1, change d'état et devient égal à un état haut, par exemple Vdd, comme le représente le chronogramme 31. Suite à la réception du front montant du signal d'horloge CK à l'instant t1, les moyens 24 remettent à zéro la tension Vi qui retrouve alors sa valeur initiale, comme le représente le chronogramme 32. La situation est identique à celle de l'instant t0, puis se répète.

On notera que l'exemple représenté en figure 3 illustre une situation normale du fonctionnement du système 1 en mode "run", ou en mode "stand-by". En effet, les signaux d'horloge CK sont périodiquement fournis aux moyens de détection d'oscillation 13 de sorte que la tension Vo ne change pas d'état, comme le représente le chronogramme 33.

A titre d'exemple uniquement, considérons la situation anormale qui suit. Pour une raison quelconque, la fréquence du signal d'horloge CK décroît continûment. En conséquence, le condensateur 23 est remis à zéro au terme d'une période qui croît continûment, de sorte que la tension Vi continue à croître linéairement avec le temps, jusqu'à atteindre le seuil de tension Vth, ce qui entraîne la commutation du circuit "Trigger de Schmidt". Dans ce cas, la tension Vo change d'état. Autrement dit, le circuit "Trigger de Schmidt" fournit une consigne de remise à zéro du système 1, comme cela est décrit ci-après.

On note, quand le système est en mode "sleep", que les moyens de détection d'oscillation 13 ne contrôlent plus l'activité de l'horloge de système 12, puisque celle-ci est désactivée.

Comme le représente la figure 1, le système 1 comprend également des moyens 16 pour réveiller le système 1, quand celui-ci fonctionne en mode "sleep".

En outre, les moyens de réveil 16 sont internes au système 1, et sont agencés de manière à réaliser, dès que le système 1 passe en mode "sleep", une base de temps autonome et un réveil de ce système au terme d'une durée prédéterminée et, quand le système 1 n'est pas en mode "sleep", une fonction différente de celles de base de temps et de réveil.

Dans le mode de réalisation préféré représenté en figure 1, les moyens de réveil 16 comprennent les moyens de détection d'oscillation 13 utilisés en mode "sleep" pour réaliser la base de temps autonome, tout en contrôlant en mode "run" ou en mode "stand-by" l'activité de l'horloge de système 12, comme cela a été décrit ci-dessus en relation avec la figure 3.

On va brièvement rappeler le fonctionnement de moyens de détection d'oscillation 13, dans le cas où le système 1 est en mode "sleep".

La figure 4 représente trois chronogrammes 41 à 43 illustrant respectivement les formes d'onde du signal d'horloge CK, de la tension Vi et de la tension Vo, dans le cas où le système 1 est en mode "sleep".

L'instant t0 représenté en figure 4 est identique à celui décrit en relation avec la figure 3. A l'instant t1, la tension Vi n'est pas remise à zéro, puisque le signal d'horloge CK ne change pas d'état, comme le représente le chronogramme 41. Ainsi, cette tension continue à croître linéairement, comme le représente le chronogramme 42. A l'instant t3, typiquement 10 ms après l'instant t0, la tension Vi atteint le seuil de tension Vth qui est le point de commutation du circuit 25. En conséquence, le circuit 25 fournit en sortie une impulsion en tant que tension Vo, comme le représente le chronogramme 43. Une telle impulsion peut alors être utilisée pour fournir un signal de remise à zéro du système 1, ce qui réalise une base de temps autonome susceptible de se déclencher dès que le système 1 passe en mode "sleep", et de le réveiller au terme d'une durée typiquement égale à 10 ms.

A titre de perfectionnement, comme le représente la figure 1, les moyens de réveil 16 peuvent comprendre en outre des moyens de comptage 17, des moyens de mémorisation 18, des moyens de comparaison 19 et des moyens de commande 20.

Les moyens de comptage 17 comprennent des première et seconde bornes d'entrée désignées respectivement 171 et 172, et une borne de sortie 173. Les moyens de comptage 17 sont agencés pour pouvoir recevoir la tension Vo, c'est-à-dire pour pouvoir recevoir des impulsions telles que celle fournie à l'instant t3 par les moyens de détection d'oscillation 13. Les moyens de comptage 17 sont agencés également pour pouvoir compter le nombre d'impulsions qui lui sont fournies, et fournir ce résultat. A cet effet, la borne 171 est connectée à la borne 134, de sorte que les moyens de comptage 17 peuvent recevoir la tension Vo.

Les moyens de mémorisation 18 comprennent une borne d'entrée 181 et une borne de sortie 182. Les moyens de mémorisation 18 sont agencés pour stocker une pluralité de nombres d'impulsions prédéterminés, et fournir l'un de ces nombres. A cet effet, la borne 181 est connectée à la borne 113, de sorte que les valeurs stockées dans les moyens de mémorisation 18 peuvent être modifiées, via l'unité de traitement centrale 11. De préférence, les moyens de mémorisation 18 comprennent un registre d'option pourvue d'une pluralité de bits. On rappelle qu'un registre d'option est un registre dont le contenu n'est pas remis à zéro lors du réveil du système comprenant ce registre. Autrement dit, dans le cadre du mode de réalisation préféré représenté en figure 1, les valeurs stockées dans un tel registre peuvent être modifiées uniquement par une réécriture via l'unité de traitement centrale 11 du système 1, ou lors de l'initialisation du système 1, c'est-à-dire lors de l'application de sa source d'alimentation.

A titre d'exemple, considérons un registre d'option pourvue de trois bits B0 à B2. La valeur représentée par les bits B2, B1, B0 est égale à l'un des nombres d'impulsions prédéterminés, l'unité de temps étant égale à 10 ms, c'est-à-dire la durée entre deux impulsions successives fournies en mode "sleep" par les moyens de détection d'oscillation 13. La table I ci-dessous représente un exemple de correspondance entre les bits B2, B1, B0 et le nombre d'impulsions prédéterminé N.

**Table I**

| **B2** | **B1** | **B0** | **N** |
|---|---|---|---|
| 0 | 0 | 0 | 1 |
| 0 | 0 | 1 | 2 |
| 0 | 1 | 0 | 4 |
| 0 | 1 | 1 | 8 |
| 1 | 0 | 0 | 16 |
| 1 | 0 | 1 | 32 |
| 1 | 1 | 0 | 64 |
| 1 | 1 | 1 | 128 |

A titre de perfectionnement, on peut prévoir un registre d'option à quatre bits, le quatrième bit étant utilisé pour valider ou invalider la fonction de base de temps autonome que peuvent remplir les moyens de détection d'oscillation 13, quand le système 1 est en mode "sleep".

A titre de perfectionnement également, on peut prévoir un registre d'option pourvu d'un plus grand nombre de bits, de manière à pouvoir stocker un plus grand nombre de nombre d'impulsions prédéterminés.

Les moyens de comparaison 19 comprennent des première et seconde bornes d'entrée désignées respectivement 191 et 192, et une borne de sortie 193. Les moyens de comparaison 19 sont agencés pour pouvoir recevoir le nombre d'impulsions compté, ainsi que l'un des nombres d'impulsions prédéterminés, comparer ces nombres, et fournir un signal de demande de remise à zéro, quand il y a égalité entre eux. A cet effet, la borne 191 est connectée à la borne 173, de sorte que les moyens de comparaison 19 peuvent recevoir le nombre d'impulsions compté, depuis la précédente remise à zéro des moyens de comptage 17. Et la borne 192 est connectée à la borne 182, de sorte que les moyens de comparaison 19 peuvent recevoir l'un des nombres d'impulsions prédéterminés stockés dans les moyens de mémorisation 18.

Les moyens de commande 20 comprennent une borne d'entrée 201 et des première et seconde bornes de sortie désignées respectivement 202 et 203. Les moyens de commande 20 sont agencés de manière à pouvoir gérer l'ensemble des signaux de remise à zéro du système 1, et fournir un signal de commande de remise à zéro à la plupart des composants du système 1. A cet effet, la borne 201 est connectée à la borne 193, de sorte que les moyens de commande 20 peuvent recevoir le signal de demande de remise à zéro fourni par les moyens de comparaison 19. La borne 202 est connectée aux bornes 112 et 142, de sorte que les moyens 20 peuvent commander la remise à zéro de l'unité de traitement centrale 11 et du périphérique 14, respectivement. Et la borne 203 est connectée aux bornes 121, 133 et 172, de sorte que les moyens 20 peuvent commander la remise à zéro de l'horloge de système 12, des moyens de détection d'oscillation 13 et des moyens de comptage 17, respectivement.

Pour illustrer une telle gestion des signaux de remise à zéro, considérons le cas où le système 1 est en mode "run" ou en mode "stand-by", et qu'il se produit une situation anormale telle que décrite ci-dessus. Une impulsion est alors fournie par les moyens de détection d'oscillation 13 et, dans ce cas, les moyens de commande 20 fournissent un signal de commande de remise à zéro du système 1.

Considérons maintenant le cas où le système 1 est en mode "sleep", et que les moyens de détection d'oscillation 13 sont utilisés en tant que base de temps pour une durée prédéterminée correspondant à un nombre N supérieur à 1. Comme le représente la figure 4, à l'instant t3 une impulsion est fournie en tant que tension Vo. Les moyens de comptage 17 supposés initialisés à l'instant t0, fournissent un nombre d'impulsions compté égal à 1 qui est différent du nombre N prédéterminé. En conséquence, les moyens de comparaison 19 ne fournissent un signal de demande de remise à zéro, et la tension Vi devient nulle. La situation est alors identique à celle de l'instant t0, et se répète.

Par conséquent, en combinaison avec les moyens logiques 17 à 20, les moyens de détection d'oscillation 13 fournissent en mode "sleep" des impulsions typiquement toutes les 10 ms, ce qui réalise une base de temps. Le signal d'horloge alors fourni a une seconde fréquence qui est de l'ordre de 100 Hz. On note que cette fréquence est notablement inférieure à 500 Hz, c'est-à-dire à la première fréquence telle que défini ci-dessus. Il va de soi que les différentes valeurs de fréquence ne sont données qu'à titre illustratif uniquement.

L'homme de l'art note que la fréquence des moyens de détection d'oscillation 13 dépend de la capacité du condensateur 23, et de l'intensité du courant Idd, décrits en relation avec la figure 2.

On notera que ce système est particulièrement avantageux, puisque la réalisation en mode "sleep" d'une base de temps autonome telle que décrite ci-dessus, n'occasionne qu'une faible consommation de puissance électrique. En effet, un fonctionnement repose principalement sur l'injection du courant Idd pour charger le condensateur 23.

On notera également que ce système est particulièrement avantageux, puisque la surface d'occupation nécessaire pour réaliser un tel agencement est limitée à celle des moyens logiques 17 à 20. En effet, les moyens de détection d'oscillation 13 sont généralement présents dans un tel système.

On va décrire le fonctionnement du système 1 décrit en relation avec les figures 1 à 4, quand celui-ci passe du mode "run" ou "stand-by" au mode "sleep", et inversement.

La figure 5 représente trois chronogrammes 51 à 53 illustrant respectivement les formes d'ondes du signal d'horloge CK, de la tension Vo, et du signal de remise à zéro RST.

Au cours de la période allant jusqu'à un instant T0, le système 1 est en mode "run" ou "stand-by", ainsi que pour la période commençant à un instant T1. Au cours de ces périodes, l'horloge de système 12 est activée, et le signal d'horloge CK change périodiquement d'état, comme le représente le chronogramme 51. Dans le même temps, la tension Vo fournie par les moyens de détection d'oscillation 13 est donc nulle, ainsi que le signal de remise à zéro RST, comme le représentent les chronogrammes 52 et 53. Il va de soi qu'une telle situation correspond à une situation normale, comme cela a déjà été décrit précédemment.

Au-delà de l'instant T0, le système 1 est en mode "sleep". Ainsi, l'horloge de système 12 est désactivée, et le signal d'horloge CK ne change plus périodiquement d'état, comme le représente le chronogramme 51. Dans le même temps, les moyens de détection d'oscillation 13 fournissent toutes les 10 ms une impulsion, comme le représente le chronogramme 52. Considérons que le nombre d'impulsions prédéterminé N est été choisi égal à 4, le signal de remise à zéro RST est nul, tant que le nombre d'impulsions compté n'est pas égal à 4, comme le représente le chronogramme 53. A un instant T2, le nombre d'impulsions compté est égal à 4. Ainsi, les moyens de comparaison 19 fournissent une impulsion, comme le représente le chronogramme 53. La durée qui s'écoule entre les instants T2 et T1 correspond à un temps de réaction du système 1, ainsi qu'à un temps de stabilisation de ce système, suite à la remise à zéro fournie à l'instant T2. Ainsi, à l'instant T1, la situation est semblable à celle initiale, antérieure à l'instant T0.

Il va de soi pour l'homme de l'art que la description détaillée ci-dessus peut subir diverses modifications sans sortir du cadre de la présente invention. A titre de variante de réalisation, on peut remplacer ces moyens de détection d'oscillation par des moyens internes au système, ces moyens étant susceptibles de réaliser, dès que le système passe en mode "sleep", une base de temps autonome et un réveil de ce système au terme d'une durée prédéterminée et, quand le système n'est pas en mode "sleep", une fonction différente de celles de base de temps et de réveil.

## Revendications

1. Système (1) alimenté par une source d'alimentation électrique, et pouvant fonctionner en mode "sleep", ce système comprenant :
- une unité de traitement centrale (11);
- une horloge de système (12) agencée pour fournir, à l'unité de traitement centrale, un signal d'horloge (CK) à une première fréquence ;
- des moyens de détection d'oscillation (13) pour contrôler l'activité de l'horloge de système lorsque le système fonctionne dans un mode "run" ou un mode "stand-by",
ce système pouvant être mis dans un mode "sleep" dans lequel l'unité de traitement centrale (11) et l'horloge de système (12) sont désactivées, ce système comprenant en outre :
- des moyens (16) pour réveiller l'unité de traitement centrale (11) et l'horloge de système (12), quand le système est en mode "sleep",
ce système étant **caractérisé en ce que** les moyens de réveil sont internes au système et comprennent les moyens de détection d'oscillation (13), ces moyens de détection d'oscillation (13) formant, lorsque le système est en mode "sleep", une base de temps autonome pour réveiller l'unité de traitement centrale (11) et l'horloge de système (12) au terme d'une durée prédéterminée.

2. Système (1) selon la revendication 1, **caractérisé en ce que** les moyens de détection d'oscillation (13) sont agencés pour fournir en mode "sleep" des impulsions (Vo) à une seconde fréquence qui est inférieure à la première fréquence.

3. Système (1) selon la revendication 2, **caractérisé en ce que** les moyens de réveil (16) comprennent en outre :
- des moyens de mémorisation (18) agencés de manière à stocker une pluralité de nombres d'impulsions prédéterminés, et à fournir l'un de ces nombres représentant la durée prédéterminée de la base de temps autonome; et
- des moyens de comptage (17) agencés de manière à recevoir les impulsions fournies par les moyens de détection d'oscillation, à compter le nombre d'impulsions fournies par les moyens de détection d'oscillation, et fournir ce nombre.

4. Système (1) selon la revendication 3, **caractérisé en ce que** les moyens de réveil (16) comprennent en outre des moyens de comparaison (19) agencés de manière à recevoir le nombre d'impulsions compté, et l'un des nombres d'impulsions prédéterminés, à comparer ces nombres, et à fournir une impulsion (RST) destinée à remettre à zéro le système, quand il y a égalité entre eux.

5. Système (1) selon la revendication 4, **caractérisé en ce que** les moyens de mémorisation (18) comprennent un registre d'option contenant une pluralité de bits.

6. Système (1) selon la revendication 5, **caractérisé en ce que** le registre d'option contient au moins deux bits, et **en ce que** l'un de ces deux bits est destiné à valider ou invalider la fonction de base de temps autonome que peut remplir les moyens de détection d'oscillation, quand le système est en mode "sleep".

## Claims

1. System (1) supplied by an electric power source, and able to operate in "sleep" mode, this system including :
- a central processing unit (11);
- a system clock (12) arranged to supply, to the central processing unit, a clock signal (CK) at a first frequency;
- oscillation detection means (13) for monitoring the activity of the system clock when the system operates in a "run" mode or a "stand-by" mode;
this system being able to be put in a "sleep" mode wherein the central processing unit (11) and the system clock (12) are deactivated, this system further including :
- means (16) for reactivating the central processing unit (11) and the system clock (12), when the system is in "sleep" mode,
this system being **characterised in that** the reactivating means are internal to the system and include the oscillation detection means (13), these oscillation detection means forming, when the system is in "sleep" mode, an autonomous time base for reactivating the central procession unit (11) and the system clock (12) at the end of a predetermined time interval.

2. System (1) according to claim 1, **characterised in that** the oscillation detection means (13) are arranged to supply pulses (Vo) in "sleep" mode at a second frequency which is lower than the first frequency.

3. System (1) according to claim 2, **characterised in that** the reactivating means (16) also include :
- storage means (18) arranged so as to store a plurality of predetermined numbers of pulses, and to supply one of these numbers representing the predetermined time interval of the autonomous time base; and
- counting means (17) arranged so as to receive the pulses supplied by the oscillation detection means, to count the number of received pulses supplied by the oscillation detection means, and to supply this number.

4. System (1) according to claim 3, **characterised in that** the reactivating means (16) further comprise comparing means (19) arranged so as to receive the counted number of pulses, as well as one of the predetermined numbers of pulses, to compare these numbers and to supply a pulse (RST) intended to reset the system when these numbers are equal.

5. System (1) according to claim 4, **characterised in that** the storage means (18) include an option register containing a plurality of bits.

6. System (1) according to claim 5, **characterised in that** the option register contains at least two bits, and **in that** one of these two bits is intended to validate or invalidate the autonomous time base function which the oscillation detection means can fulfil when the system is in "sleep" mode.

## Patentansprüche

1. System (1), das von einer Stromversorgungsquelle versorgt wird und im "Sleep"-Modus arbeiten kann, wobei dieses System umfaßt:
- eine Zentraleinheit (11);
- einen Systemtakt (12), der so beschaffen ist, daß er an die Zentraleinheit ein Taktsignal (CK) mit einer ersten Frequenz liefert;
- Oszillationserfassungsmittel (13), die die Aktivität des Systemtakts steuern, wenn das System in einem "Run"-Modus oder in einem "Standby"-Modus arbeitet,
- wobei dieses System in einen "Sleep"-Modus versetzt werden kann, in dem die Zentraleinheit (11) und der Systemtakt (12) deaktiviert sind, wobei dieses System außerdem umfaßt:
- Mittel (16), die die Zentraleinheit (11) und den Systemtakt (12) aufwecken, wenn das System im "Sleep"-Modus ist,
wobei dieses System **dadurch gekennzeichnet ist, daß** sich die Aufweckmittel innerhalb des Systems befinden und die Oszillationserfassungsmittel (13) umfassen, wobei diese Oszillationserfassungsmittel (13) dann, wenn das System im "Sleep"-Modus ist, einen selbständigen Basistakt erzeugen, um die Zentraleinheit (11) und den Systemtakt (12) am Ende einer vorgegebenen Zeitspanne aufzuwecken.

2. System (1) nach Anspruch 1, **dadurch gekennzeichnet, daß** die Oszillationserfassungsmittel (13) so beschaffen sind, daß sie im "Sleep"-Modus Impulse (Vo) mit einer zweiten Frequenz, die niedriger als die erste Frequenz ist, liefern.

3. System (1) nach Anspruch 2, **dadurch gekennzeichnet, daß** die Aufweckmittel (16) außerdem umfassen:
- Speichermittel (18), die so beschaffen sind, daß sie mehrere Impulsgesamtheiten mit jeweils vorgegebener Impulsanzahl speichern und eine dieser Gesamtheiten, die die vorgegebene Zeitspanne des selbständigen Basistakts repräsentiert, liefern; und
- Zählmittel (17), die so beschaffen sind, daß sie die von den Oszillationserfassungsmittel gelieferten Impulse empfangen, die Anzahl der von den Oszillationserfassungsmitteln gelieferten Impulse zählen und diese Anzahl liefern.

4. System (1) nach Anspruch 3, **dadurch gekennzeichnet, daß** die Aufweckmittel (16) außerdem Vergleichsmittel (19) umfassen, die so beschaffen sind, daß sie die gezählte Anzahl von Impulsen und eine der Impulsgesamtheiten mit vorgegebener Impulsanzahl empfangen, diese Zahlen miteinander vergleichen und bei Gleichheit zwischen ihnen einen Impuls (RST) liefern, der das System auf null zurücksetzen soll.

5. System (1) nach Anspruch 4, **dadurch gekennzeichnet, daß** die Speichermittel (18) ein Optionsregister umfassen, das mehrere Bits umfaßt.

6. System (1) nach Anspruch 5, **dadurch gekennzeichnet, daß** das Optionsregister wenigstens zwei Bits enthält und daß eines dieser zwei Bits dazu vorgesehen ist, die Funktion des selbständigen Basistakts, die die Oszillationserfassungsmittel erfüllen können, wenn sich das System im "Sleep"-Modus befindet, für gültig oder ungültig zu erklären.
